# EUROPÄISCHE PATENTSCHRIFT

(11) **EP 2 192 279 B1**
(45) Veröffentlichungstag und Bekanntmachung des Hinweises auf die Patenterteilung: **03.04.2013**
(21) Anmeldenummer: 09014432.0
(22) Anmeldetag: 19.11.2009
(51) Int. Cl.: F01N 3/035, F01N 3/20

(54) **Abgasnachbehandlungssystem für eine Brennkraftmaschine**
Exhaust gas treatment system for an internal combustion engine
Système de traitement des gaz d'échappement d'un moteur à combustion interne

(30) Priorität: 26.11.2008 DE 102008059078
(43) Veröffentlichungstag der Anmeldung: 02.06.2010
(73) Patentinhaber: DEUTZ Aktiengesellschaft, 51149 Köln (DE)
(72) Erfinder: Schraml, Stephan, Dr., 53639 Königswinter (DE); Nork, Benedikt, 50679 Köln (DE)

(56) Entgegenhaltungen:
- EP-A- 1 338 770
- EP-A- 1 783 336
- EP-A1- 0 719 911
- WO-A-2008/103109
- WO-A-2008/137028
- DE-A1-102004 019 659
- DE-A1-102005 039 630
- US-B1- 7 032 376

## Beschreibung

Die Erfindung betrifft ein Abgasnachbehandlungssystem für insbesondere eine selbstzündende Brennkraftmaschine mit einem in eine Abgasleitung eingesetzten DeNOx-Katalysator, einem Partikelfilter und einer Einleitvorrichtung für ein Reduktionsmittel.

Ein derartiges Abgasnachbehandlungssystem ist aus der EP 1 054 722 B1 bekannt. Das in diesem Dokument beschriebene Abgasnachbehandlungssystem ist ein System zur selektiven katalytischen Reduktion (SCR) zur Behandlung von NOx und ein Partikelfilter zur Behandlung von Reststoffteilchen enthaltendem Verbrennungsabgas, umfassend einen Oxidationskatalysator, einen Partikelfilter, eine Einbrlngvorrichtung für ein Reduktionsmittel und einen SCR-Katalysator, die darüber hinaus in dieser Reihenfolge in die Abgasleitung eingeschaltet sind.

WO 2008/137028 A1 offenbart ein Abgasnachbehandlungssystem mit Brenner, DPF und SCR-Katalysator.

Aus der WO 20081103109 A1 ist ein Kontrollverfahren zur Steuerung eines Abgasnachbehandlungssystems mit Dieseloxidationskatalysator, DPF und SCR bekannt.

DE 10 2004 019 659 zeigt eine Abgasemissions-Steuervorrichtung mit Brenner, Oxidationskatalysator und Partikelfilter.

In der EP 0 719 911 wird eine Vorrichtung zum Regenerieren eines Partikelfilters mit zweistufigem Brenner offenbart.

Der Erfindung liegt die Aufgabe zugrunde, ein derartiges System insbesondere hinsichtlich der Regenerationsmöglichkeit des Partikelfilters und der Effizienz der katalytischen NOx-Nachbehandlung weiterzuentwickeln.

Der Erfindung liegt zunächst einmal die Erkenntnis zugrunde, dass die Emissionsgrenzen EU6 / Tier4 die Entwickler und Hersteller für LKW und Busse sowie Industriemotoren voraussichtlich final zwingen werden, (Diesel)-Partikelfilter und DeNOx-Systeme (beispielsweise SCR-Katalysatoren) gemeinsam zur Anwendung zu bringen.

Hierbei ist vor allem problematisch:

Die niedrigen Abgastemperaturen von selbstzündenden Brennkraftmaschinen (Dieselmotoren) machen eine chemische oder physikalische Reinigung des Abgases sehr schwierig. Die Reduktion der Stickoxide (NOx) erfolgt in der Regel durch katalytische Systeme, beispielsweise einen SCR-Katalysator. Diese funktionieren jedoch nur effizient in einem Temperaturfenster ab ca. 300 °C. Auch kontinuierlich regenerierende Partikelfilter arbeiten ebenfalls erst ab ca. 250 °C. Unterhalb von 300 °C ist eine effektive Abgasnachbehandlung nicht oder nur mit großem Aufwand möglich. Bei Nutzfahrzeugen fallen die Abgastemperaturen im täglichen Betrieb bei vielen Anwendungen häufig deutlich unter 300 °C.

Die Gesetzgebung hat diesen Umstand erkannt und mit dem neuen, sehr kalten dynamischen Prüfzyklus WHTC (World-Harmised-Transiet-Cycle) für Onroad-Anwendungen reagiert. Für Offroad-Anwendungen gibt es den NRTC-Prüfzyklus (Nonroad Transient Cycle).

### Verwendung von AGR

Zur Reduktion der von der selbstzündenden Brennkraftmaschine emittierten NOx-Rohemissionen ist die Anwendung einer gekühlten externen Abgasrückführung (AGR) üblich. Hierbei wird Abgas entnommen, gekühlt, und der angesaugten Verbrennungsluft wieder beigemischt. Hierdurch wird eine Reduktion des N2-Partialdrucks erreicht, die der Bildung von schädlichem NOx während der Verbrennung entgegenwirkt. Durch die Absenkung des 02-Gehaltes bei der Rezirkulation von Abgas in die Ansaugluft des Motors entstehen aber zusätzliche Partikelemissionen. Das zurückzuführende Abgas muss gekühlt werden, der zu installierende Kühler ist teuer und nimmt im Fahrzeug wertvollen Platz ein. Bei der Verwendung von Abgasrückführung wird sehr aufwendige Mess- und Regeltechnik zur Bestimmung der Abgasrückführrate erforderlich. Die elektronische Steuerung der Brennkraftmaschine muss in jedem Betriebszustand die Abgasrückführrate exakt erfassen und regeln können. Entsprechende Sensoren und Regleralgorithmen im Steuergerät sind aufwendig zu entwickeln. Eine große Anzahl von Sensoren zur Luftpfad-Regelung ist sehr teuer und birgt das Risiko geringer Robustheit.

### Hochdruckeinspritzung

Bei Anwendung einer Abgasrückführung kann der zunehmenden Bildung von Partikelemissionen bei der Verbrennung durch erhöhten Einspritzdruck des Kraftstoffes entgegengewirkt werden. Höhere Einspritzdrücke erfordern neue und teure Bauteile des Einspitzsystems, beispielsweise in Form von einem Common-Rail-System.

### Kristallisation

Bei der Anwendung von SCR-Katalysatoren wird dem Abgas vor dem Katalysator eine wässrige Harnstofflösung zugeführt, die im Abgas in Wasserdampf und NH3 zerfällt. Geschieht dies bei zu niedrigen Abgastemperaturen kann es zur Kristallisationsbildung kommen. Diese lokalen Anhäufungen beispielsweise in Form von Melamin können schlimmstenfalls zur Verstopfung der Abgasanlage führen.

### NTE (Not To Exceed)

Die "Not-To-Exceed Area" zwingt den Entwickler, den Ausstoß von schädlichen Abgasen im gesamten Betriebsbereich der Brennkraftmaschine sehr stark zu vereinheitlichen. Diese vom Gesetzgeber geforderte Vereinheitlichung widerspricht der physikalischen Grundlage, dass die Bildung von Stickoxiden unter anderem zeitabhängig ist. Bei einer Verbrennung in der Brennkraftmaschine entstehen also relativ viele Stickoxide bei niedrigen Drehzahlen. Die "NTE"-Forderung stellt eine erhebliche Verschärfung der Anforderung an die Schadstoffemissionen der Brennkraftmaschinen dar.

Diese gestellte Aufgabe wird durch ein Abgasnachbehandlungssystem nach Anspruch 1 bis 8 gelöst.

Bei der Ausgestaltung der Erfindung ist das Brennersystem als gestuftes System ausgelegt. Dabei ist die erste Stufe des Brenners so ausgelegt, dass mit dieser Stufe Abgastemperaturen im Bereich von ca. 300 °C erreicht werden. Ausgeführt ist diese Stufe beispielsweise derart, dass dem Brenner über eine Kraftstoffdüseneinrichtung Kraftstoff und weiterhin Brennluft zuführbar sind und die Brennluft mit dem aus der Kraftstoffdüseneinrichtung austretenden Kraftstoff in einer nachgeschalteten Luftdrallzerstäuberdüse vermischt wird.

Diese Ausgestaltunge ermöglicht durch den Einsatz eines Brenners eine deutlich verbesserte Funktion des gesamten Abgasnachbehandlungssystems. Der Einsatz des Brenners ermöglicht ein aktives Aufheizen des Abgasnachbehandlungssystems mit den dargestellten Komponenten.

Die Einleitvorrichtung für Reduktionsmittel und der DeNOx-Katalysator werden zur Reduktion von Stickoxiden in dem Abgas eingesetzt. Über die Einleitvorrichtung wird zum Beispiel eine wässrige Harnstofflösung (AdBlue) in die Abgasleitung eingegeben, die in dem SCR-Katalysator mit den Stickoxiden im Abgas reagieren. Für diese Reaktion ist bei den angestrebten hohen Wirkungsgraden eine Abgastemperatur von mindestens ca. 300 °C erforderlich.

In Weiterbildung der Erfindung ist in Abgasströmungsrichtung anschließend an den Brenner ein Dieseloxidationskatalysator in der Abgasleitung angeordnet. Diese Ausgestaltung stellt eine besonders vorteilhafte Weiterbildung dar, mit der die Möglichkeiten des Einsatzes und der Verringerung der schädlichen Abgasemissionen eines derartigen Abgasnachbehandlungssystems weiter verbessert werden. Während gemäß der Ausgestaltung nach den unabhängigen Patentansprüchen 1 und 2 der Brenner so ausgelegt sein muss, dass mit diesem eine thermische Leistung erreicht wird, die zu einer Regeneration des Partikelfilters - also einem Abbrennen der in dem Feinstofffilter gesammelten Partikel - ausreichen, ist durch die zusätzliche Anordnung eines Dieseloxidationskatalysators vor dem Partikelfilter (gemäß der Ausgestaltung nach Patentanspruch 2 nicht unmittelbar vor dem Partikelfilter) die Möglichkeit geschaffen, den Brenner und den Dieseloxidationskatalysator gemeinsam und additiv zur Regeneration des Partikelfilters zu nutzen. Der Dieseloxidationskatalysator benötigt eine bestimmte Abgastemperatur (in der Größenordnung von mindestens 300 °C), um seine Aktivität zu starten, nämlich Zusatz von zusätzlichen HC's beispielsweise durch zusätzliche Einspritzung von Kraftstoff, und im Ergebnis nachfolgend die in dem Partikelfilter gesammelten Partikel zu entfernen. Diese Zündtemperatur wird aber nicht in allen Arbeitsbereichen der Brennkraftmaschine erreicht, wobei dies bei vielen Einsätzen der Brennkraftmaschine außerhalb von Fahrzeugapplikationen häufiger der Fall ist. Hier wird nun durch den Einsatz des Brenners die Möglichkeit geschaffen, sicherzustellen, dass die Zündtemperatur des Dieseloxidationskatalysators in jedem Fall auch bei ungünstigen Betriebsverhältnissen erreicht wird. Der Brenner wird also bei zusätzlichem Einsatz einer HC-Dosiereinheit zur thermischen Partikelfilterregeneration und/oder zur Erhitzung des Abgasnachbehandlungssystems verwendet.

Bei der Ausgestaltung nach Patentanspruch 1 kann zusätzlich auch noch direkt vor dem DeNOx-Katalysator ein weiterer Dieseloxidationskatalysator angeordnet sein. Damit wird eine zusätzliche NO₂-Erzeugung erreicht, die eine Effizienzsteigerung des DeNOx-Katalysators bewirkt (speziell bei SCR-Systemen).

In weiterer Ausgestaltung ist der Brenner leistungsgeregelt und/oder periodisch an- und ausschaltbar. Dadurch ist eine gute Regelungsmöglichkeit des Systems gegeben und das Abgasnachbehandlungssystem kann in einem optimalen Temperaturfenster betrieben werden. Dies gilt vor allem für das Betreiben des DeNOx-Katalysators, aber auch für eine nachfolgend noch näher erläuterte passive Partikelfilterregeneration.

An der Kraftstoffdüseneinrichtung ist weiterhin eine Heizeinrichtung zum zumindest zeitweiligen Verdampfen des Kraftstoffs vorgesehen, die in den Düsenkörper oder Trägerkörper integriert ist. Besonders vorteilhaft ist der Trägerkörper selbst ein Glühstift.

Die erste Stufe ist für eine thermische Konditionierung (im Bereich von ca. 300°C bis 400 °C) des Katalysators und des Partikelfiltersystems geschaltet und die (zuzuschaltende) zweite Stufe ist für eine thermische Filterregeneration geschaltet.

Unter Einschaltung des Dieseloxidationskatalysators erfolgt durch die erfindungsgemäße Ausgestaltung eine zusätzliche passive Partikelfilterregeneration. Durch die Umwandlung von NO zu NO₂ in dem Dieseloxidationskatalysator wird dabei ohne die zusätzliche Zuführung von zusätzlichem Kraftstoff Ruß in dem Partikelfilter abgebaut. Dadurch werden die Regenerationsintervalle des Partikelfilters signifikant verlängert. Dies bewirkt einen Kraftstoffverbrauchsvorteil (insbesondere hinsichtlich der zweiten Stufe des Brennersystems). Weiterhin wird der Wirkungsgrad des DeNOx-Katalysators im Zyklus so stark erhöht, dass unter Umständen auf eine Abgasrückführung bei der Brennkraftmaschine verzichtet werden kann. Dadurch werden die Systemkosten und -komplexität deutlich vermindert.

Zusammenfassend werden durch das temperaturgeregelte Abgasnachbehandlungssystem folgende Vorteile erreicht:
- Die temperaturgeregelte Abgasanlage arbeitet in allen Betriebsweisen der Brennkraftmaschine mit einem maximalen Wirkungsgrad. Die NOx-Rohemissionen können in allen denkbaren Fahrzyklen / ESC / ETC / WHSC / WHTC / customer-low-load-cycle ... etc.) um 90 % und mehr reduziert werden. Die Verwendung eines kontinuierlich regenerierenden Partikelfiltersystems zusammen mit einem SCR-Katalysator (SCRT) (SCRT bedeutet Dieseloxidationskatalysator + Partikelfilter + Einbringvorrichtung für ein Reduktionsmittel + SCR-Katalysator, und zwar genau in dieser Reihenfolge) kann verwendet werden, da hohe NOx-Rohemissionen realisiert werden können.
- Bei der Realisierung des geregelten oder periodisch betriebenen Brenners für Abgasnachbehandlungssysteme kann gegebenenfalls auf eine Abgasrückführung verzichtet werden.
- Bei der Realisierung des geregelten oder periodisch betriebenen Brenners für Abgasnachbehandlungssysteme kann gegebenenfalls auf sehr hohe Einspritzdrücke beispielsweise der CR verzichtet werden (da keine Abgasrückführung vorgenommen wird).
- Kristallisation von in wässriger Lösung vorliegendem Reduktionsmittel findet oberhalb von 300 °C praktisch nicht mehr statt.
- Das Realisieren der NTE-Forderung wird unter Verwendung des geregelten oder periodisch betriebenen Brenners für Abgasnachbehandlungssysteme einfacher möglich.

## Patentansprüche

1. Abgasnachbehandlungssystem für insbesondere eine selbstzündende Brennkraftmaschine mit einem in eine Abgasleitung eingesetzten DeNOx-Katalysator, einem Partikelfilter und einer Einleitvorrichtung für ein Reduktionsmittel, einem Brenner, wobei der Brenner, der ein gestufter Brenner ist, der Partikelfilter, die Einleitvorrichtung und der DeNOx-Katalysator in dieser Reihenfolge in der Abgasleitung angeordnet sind,
**dadurch gekennzeichnet, dass** bei dem gestuften Brenner die erste Stufe für eine thermische Konditionierung des Katalysators bzw. der Katalysatoren und des Partikelfiltersystems geschaltet ist und zusätzlich die zweite Stufe für eine thermische Partikelfilterregeneration zugeschallet ist.

2. Abgasnachbehandlungssystem nach Anspruch 1,
**dadurch gekennzeichnet, dass** in Abgasströmungsrichtung anschließend an den Brenner ein Dieseloxidationskatalysator in der Abgasleitung angeordnet ist.

3. Abgasnachbehandlungssystem nach einem der vorherigen Ansprüche,
**dadurch gekennzeichnet, dass** der Brenner leistungsgeregelt ist.

4. Abgasnachbehandlungssystem nach einem der vorherigen Ansprüche,
**dadurch gekennzeichnet; dass** der Brenner periodisch an- und ausschaltbar ist.

5. Abgasnachbehandlungssystem nach Anspruch 1,
**dadurch gekennzeichnet, dass** die zweite Stufe ein katalytischer Brenner ist.

6. Abgasnachbehandlungssystem nach Anspruch 5
**dadurch gekennzeichnet, dass** die thermische Konditionierung im Bereich von ca. 300 °C bis 400 °C erfolgt.

## Claims

1. Exhaust-gas aftertreatment system for, in particular, an auto-ignition internal combustion engine, having a DeNOx catalytic converter which is inserted into an exhaust line, having a particle filter and having an introduction device for a reducing agent, having a burner, wherein the burner, which is a staged burner, the particle filter, the introduction device and the DeNOx catalytic converter are arranged in this sequence in the exhaust line,
**characterized in that**, in the staged burner, the first stage is switched for thermal conditioning of the catalytic converter or of the catalytic converters and of the particle filter system, and the second stage is additionally activated for thermal particle filter regeneration.

2. Exhaust-gas aftertreatment system according to Claim 1, **characterized in that** a diesel oxidation catalytic converter is arranged in the exhaust line so as to follow the burner in the exhaust-gas flow direction.

3. Exhaust-gas aftertreatment system according to one of the preceding claims,
**characterized in that** the burner is regulated in terms of its power.

4. Exhaust-gas aftertreatment system according to one of the preceding claims,
**characterized in that** the burner can be periodically activated and deactivated.

5. Exhaust-gas aftertreatment system according to Claim 1, **characterized in that** the second stage is a catalytic burner.

6. Exhaust-gas aftertreatment system according to Claim 5, **characterized in that** the thermal conditioning takes place in the range from approximately 300°C to 400°C.

## Revendications

1. Système de traitement des gaz d'échappement en particulier pour un moteur à combustion interne à allumage spontané, avec un catalyseur DeNOx inséré dans une conduite de gaz d'échappement, un filtre à particules et un dispositif d'introduction pour un agent réducteur, un brûleur, dans lequel le brûleur, qui est un brûleur étagé, le filtre à particules, le dispositif d'introduction et le catalyseur DeNOx sont disposés dans cet ordre dans la conduite de gaz d'échappement, **caractérisé en ce que**, avec le brûleur étagé, le premier étage est connecté pour un conditionnement thermique du catalyseur ou des catalyseurs et du système de filtre à particules et en outre le deuxième étage est connecté pour une régénération thermique du filtre à particules.

2. Système de traitement des gaz d'échappement selon la revendication 1, **caractérisé en ce qu'**un catalyseur d'oxydation diesel est disposé dans la conduite de gaz d'échappement à la suite du brûleur dans la direction d'écoulement des gaz d'échappement.

3. Système de traitement des gaz d'échappement selon l'une quelconque ses revendications précédentes, **caractérisé en ce que** le brûleur est régulé en puissance.

4. Système de traitement des gaz d'échappement selon l'une quelconque des revendications précédentes, **caractérisé en ce que** le brûleur peut être connecté et déconnecté périodiquement.

5. Système de traitement des gaz d'échappement selon la revendication 1, **caractérisé en ce que** le deuxième étage est un brûleur catalytique.

6. Système de traitement des gaz d'échappement selon la revendication 5, **caractérisé en ce que** le conditionnement thermique est effectué dans la plage d'environ 300°C à 400°C.
